# EUROPEAN PATENT APPLICATION

(11) **EP 2 159 666 A1**
(43) Date of publication of application: **03.03.2010**
(21) Application number: 08305502.0
(22) Date of filing: 26.08.2008
(51) Int. Cl.: G06F 1/32, H04W 8/18, G06K 19/07

(54) **Surface-mounted device with multi-layered SIM cards**

(71) Applicant: GEMPLUS, 13420 Gémenos (FR); Axalto, 92190 Meudon (FR)
(72) Inventor: Faure, Frédéric, 13260 CASSIS (FR); Sylvestre, Thierry, 13008 MARSEILLE (FR); Arnal, Benoit, 78140 VELIZY (FR)

(57) **Abstract**

The invention is an integrated circuit die comprising a microprocessor, a communication interface intended to work according to ISO-7816 standard, a working memory, a non volatile memory (MEM1) and an operating system. The integrated circuit die comprises a first means able to set said integrated circuit die in an activated state when a first event occurs. The integrated circuit die comprises a second means able to set said integrated circuit die in a deactivated state when a second event occurs. The deactivated state is a state where the integrated circuit die is able to send data through the communication interface only in response to an activating command and/or to a deactivating command. The invention is also an electronic device comprising a means able to establish a communication channel with a distant machine wherein the electronic device comprises first and second integrated circuit dies of the above-described type.

## Description

### (Field of the invention)

The present invention relates to surface-mounted devices intended to be used in the Machine to Machine market. It relates particularly to surface-mounted devices providing telecom features.

### (Prior art)

Smart cards, and particularly SIM cards, are based on integrated circuit dies. These integrated circuit dies are electronic tokens with limited resources. In general, integrated circuit dies comprise a plurality of memories of different type. For example, they may comprise memory of RAM, ROM, EEPROM or Flash type.

There is a need for using integrated circuit dies in the Machine to Machine market, also named as M2M market. M2M market requires hardware/software components able to run in environment conditions covering a large scope and during a long time. Typically, these components may be able to comply with a temperature range from -40°C up to +125°C, a high level humidity. These components may also comply with a lifespan up to 15 years.

M2M market uses wireless modules which are integrated in systems for providing M2M communicating services. The wireless modules may comprise an integrated circuit die such as a SIM card. The SIM card chip lifespan depends mostly on two factors: the wear of the non volatile memory and the wear of the rest of the electronics. The wear of the non volatile memory is linked to the number of erase/write cycles and the data retention capability. Founders generally guarantee these two factors for their chips in SIM card usual conditions, that is to say in the range 20°C-25°C. M2M SIM chip can provide extended temperature ranges.

Unfortunately, the number of erase/write cycles supported by a chip and the data retention time of a chip decrease in high temperatures.

In addition, the SIM card chip lifespan also depends on the usage of the SIM card. For example, when an application that stresses a specific part of the memory is often activated, the threshold of maximum number of erase/write cycles may be reached quickly. In particular, the stressed memory area may be a counter or a file frequently updated during an application processing.

It is known to implement long life mechanisms in SIM card to extend the lifespan of SIM memory. In particular, wear leveling and memory cell anti-aging mechanisms may be set in order to improve chip usage time. These mechanisms are initialized before or during the personalization stage of the SIM card.

However, as the SIM die may be welded into a wireless device, the future usage of the wireless device and of the SIM die may not be known at welding stage.

As a consequence, long life mechanisms cannot be optimized to the future usage of each SIM card. A solution may consist in considering the worst scenario in terms of usage as well as in terms of environment conditions. Nevertheless, the long life mechanisms remains not optimized, since predefined memory areas must be protected by such mechanism since the memory usage is not known in advance. Additionally, no software mechanism can extend the lifespan of the rest of the electronics.

### (Summary of the Invention)

An object of the invention is to solve the above mentioned technical problem.

The object of the present invention is an integrated circuit die comprising a microprocessor, a working memory, a non volatile memory, an operating system and a communication interface which is intended to work according to ISO-7816 standard. The integrated circuit die comprises a first means capable of setting said integrated circuit die in an activated state when a first event occurs. The integrated circuit die comprises a second means capable of setting said integrated circuit die in a deactivated state when a second event occurs. The deactivated state is a state where the integrated circuit die is capable of sending data through the communication interface only in response to an activating command and/or to a deactivating command.

Advantageously, the first event may be the receipt of the activating command by the integrated circuit die, and said second event may be the receipt of the deactivating command by the integrated circuit die.

Advantageously, the first event may be the successive receipts of the activating command and a Reset by the integrated circuit die. The second event may be the successive receipts of the deactivating command and a Reset by the integrated circuit die.

Advantageously, the integrated circuit die may comprise identification data and said activating command and deactivating command may comprise a reference to said identification data.

In preferred embodiment said identification data comprises subscriber identity data.

Alternatively, the activating command and/or the deactivating command may be managed according to a protocol different from ISO-7816 standard.

In preferred embodiment the integrated circuit die is of SIM type.

Another object of the invention is an electronic device, comprising a means capable of establishing a communication channel with a distant machine. The electronic device comprises first and second integrated circuit dies of the above-described type.

Advantageously, first and second integrated circuit dies may be connected to the electronic device by means of a welding.

Alternatively, first and second integrated circuit dies may be connected to the electronic device in a removable way.

Advantageously, the first integrated circuit die may comprise a first communication interface, said first communication interface comprising at least six pads. Said second integrated circuit die may comprise a second communication interface, said second communication interface comprising at least six pads. The electronic device may comprise a third communication interface, said third communication interface comprising at least six pads. Pads of the third communication interface may be linked to the pads of the first communication interface respectively and linked to the pads of the second communication interface respectively.

Advantageously, said first and second integrated circuit dies may come from a unique wafer.

Alternatively, said first and second integrated circuit dies may come from several wafers.

Advantageously, the first integrated circuit die may comprise a subscriber identity data and the second integrated circuit die may comprise the same subscriber identity data.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically the architecture of an integrated circuit die corresponding to a SIM smart card according to the invention;
- Figure 2 depicts schematically the architecture of a communication device comprising a plurality of integrated circuit dies according to the invention; and
- Figure 3 depicts an example of workflow corresponding to the switch from a current integrated circuit die to another one according to the invention.

### (Detailed description of the preferred embodiments)

The invention may apply to any types of integrated circuit die able to exchange data with a distant machine by means of a communication channel established by a connected device. In this specification, the integrated circuit die is a SIM die but it could be any other kind of integrated circuit die comprising a means for exchanging data through a communication channel via a connected device.

An advantage of the invention is to allow a graduated adaptation of the active physical component to both the environment and use conditions of the device. The graduated adaptation may be carried out according to a dynamic memory lifespan management policy. In particular, the invention allows adapting the memory lifespan management policy after the welding step of the SIM dies in the device. Moreover the invention allows customizing the memory lifespan management policy after usage of the device has been decided. In this case, the memory lifespan management policy is managed by a distant machine reachable through a communication channel.

Another advantage of the invention is to allow customizing the memory lifespan management policy after the device deployment on the field.

Another advantage of the invention is to allow an update of the memory lifespan management policy after a change of device usage or after an upgrade of an application installed on the device. An additional advantage of the invention is to allow an update of the memory lifespan management policy after a feedback retrieved from the field, thanks to a deployment of a set of devices.

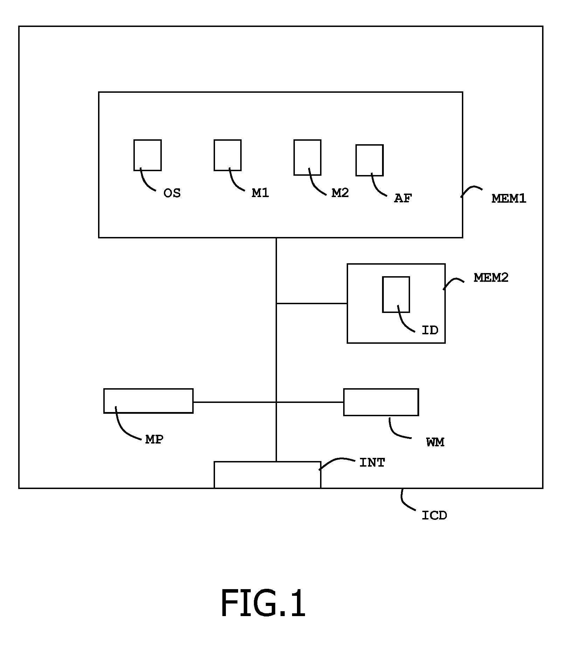

**Figure 1** shows an example of architecture of an integrated circuit die ICD corresponding to a subscriber identity card of SIM smart card type according to the invention. The integrated circuit die ICD contains a microprocessor MP, a communication interface INT, a first non volatile memory MEM1, a second memory MEM2 and a working memory WM like a RAM. The communication interface INT is intended to be connected to a device and allows exchanging data with the connected device. In a preferred embodiment, the memory MEM1 is a Flash memory. The memory MEM2 contains an identification data ID that allows identifying the die surely. For example the identification data ID may be a serial number. The memory MEM1 contains an operating system OS, a flag AF and two means M1 and M2. The first means M1 is capable of setting the integrated circuit die ICD in an activated state in response to the receipt of an activating command. The second means M2 is capable of setting the integrated circuit die ICD in a deactivated state in response to the receipt of a deactivating command.

When the integrated circuit die ICD is set to the deactivated state, the integrated circuit die ICD is able to sent data through the communication interface INT only in response to the activating command and/or to the deactivating command. In other words, the integrated circuit die ICD does not sent any ATR when ICD is a deactivated state. In this case, the integrated circuit die ICD does not send any response to command of ISO-7816 type, except to the activating command and/or to the deactivating command.

The deactivated state may correspond to the sleep mode of the SIM chip.

The flag AF is intended to contain a value corresponding to the current state of the integrated circuit die ICD. For example, the flag AF may be coded on a single bit, where the value 1 stands for deactivated state and the value 0 stands for activated state.

The two memories MEM1 and MEM2 may consist in a unique circuit or several circuits that may be of different types. The two memories MEM1 and MEM2 may be merged in a unique memory.

The operating system OS may comprise a virtual machine.

The microprocessor MP cooperates with the working memory WM and is intended to run the operating system OS. First and second means M1 and M2 may be either software applications run by the microprocessor MP or hardware designed. The two means may be implemented as two distinct elements or merged in one element.

In a preferred embodiment, the two means M1 and M2 are merged with the operating system.

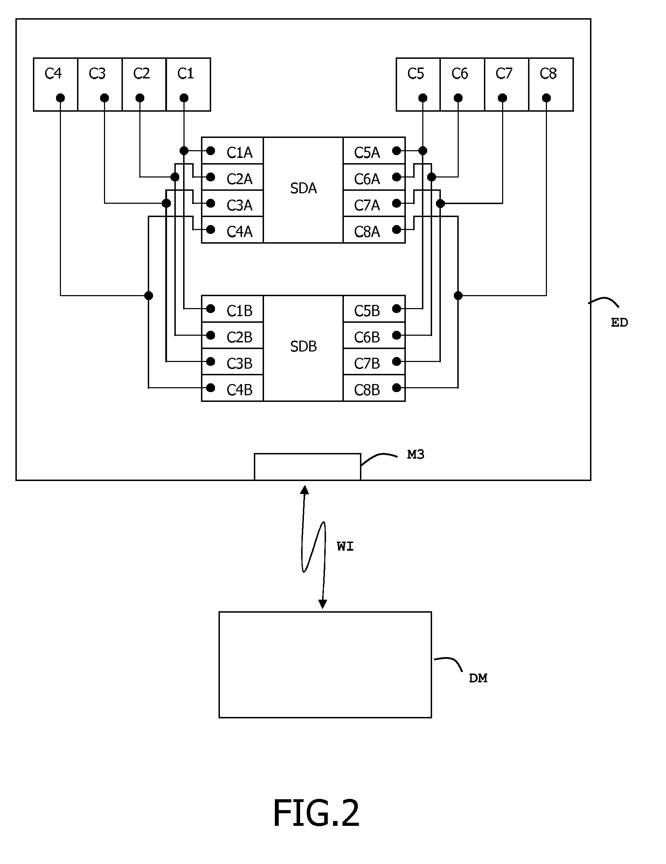

**Figure 2** shows an example of device ED comprising two integrated circuit dies according to the invention.

The device ED is intended to connect a distant machine DM through a communication channel WI. The distant machine DM may be a server able to exchange data by means of the communication channel WI. The communication channel WI may be based on the Over The Air mechanism - known as OTA - defined by the GSM 03.40, GSM 03.48 and/or ETSI/SCP - 3GPP - 3GPP2 standards. The device ED comprises a communication interface having eight pads C1 to C8. The device ED comprises first and second integrated circuit dies SDA and SDB. The first integrated circuit dies SDA comprises a communication interface having eight pads C1A to C8A. The second integrated circuit dies SDB comprises a communication interface having eight pads C1B to C8B. Pads C1, C1A and C1B are linked together. Pads C2, C2A and C2B are linked together. Same type of link is implemented for each of the device ED pads. Thus a signal coming to a given pad of the device ED is automatically sent to the corresponding set of pads of integrated circuit dies SDA and SDB. For example a signal present on C5 is also present on C5A and C5B.

The device ED may be integrated in systems such as an automatic drink distributor, an energy station or a car for example.

The device ED may comprise more than two integrated circuit dies.

In a preferred embodiment, all the integrated circuit dies belonging to a device are built in a multilayered structure and manufactured in a unique wafer.

Advantageously, all the integrated circuit dies belonging to a device comprise an operating system of the same type.

Alternatively, several integrated circuit dies belonging to a device may come from different wafers. Each of the integrated circuit dies belonging to a unique device may also comprise an operating system of its own type. For example the first integrated circuit die may comprise an operating system coming from a first die issuer and the second integrated circuit die may comprise an operating system coming from a second die issuer.

Alternatively first and second integrated circuit dies may comprise non volatile memory having different size. Thus by switching from an active integrated circuit die to another one, the available memory size may be adapted to fit dynamic user requirements.

The identification data ID of the integrated circuit die ICD contains a value specific to said integrated circuit die ICD. The specific value is used for targeting the integrated circuit die ICD when sending command to the device ED. According to the invention there is no more than one integrated circuit die in the activated state at a given time. The integrated circuit die which is in the activated state is also named the current integrated circuit die.

A first example of sequence allowing the change of the current SIM die in the device ED will be now described in detail.

The device ED comprises two integrated circuit dies SDA and SDB. SDA and SDB are SIM dies and comprise the same IMSI/KI.

At the initial step, the integrated circuit die SDA is assumed to be active and the integrated circuit die SDB is assumed to be in deactivated state. On Reset both SDA and SDB perform the internal initialization steps corresponding to a SIM boot. Only SDA sends the Answer to Reset (ATR). After this boot step, both SDA and SDB are ready to receive command through their communication interface. A communication channel WI is established between the device ED and the distant machine DM. In this example, the communication channel is an Over The Air channel. This communication channel WI allows the distant machine DM to exchange data with the two integrated circuit dies SDA and SDB via the device DE.

The distant machine DM sends an OTA message containing two commands in the following order: a deactivating command targeting SDA and an activating command targeting SDB. The target of each command is defined via a parameter which refers to identification data of the relevant integrated circuit die. Thanks to the architecture of the device DE, the OTA message is physically transmitted to the communication interfaces of both SDA and SDB. Since SDA and SDB share the same cryptographic key set the two received commands are cryptographically analyzed and interpreted by both SDA and SDB. First the deactivating command is treated in parallel by SDA and SDB. SDA performs the deactivating command and updates its activating flag in order to set the deactivated state. SDB rejects the deactivating command because the parameter of the deactivating command does not match the identification data of SDB. Thus SDB remains mute.

Then the activating command is treated in parallel by SDA and SDB. SDA rejects the activating command because the parameter of the activating command does not match the identification data of SDA. Thus SDA remains mute. SDB performs the activating command and updates its activating flag in order to set the activated state. In a further step the distant machine DM may send additional OTA messages in order to fully personalize SDB.

The OTA messages may be SMS.

In the above example, the integrated circuit dies are capable of sending outgoing data in response to the activating command only.

Alternatively, the integrated circuit dies may be capable of sending outgoing data in response to only both the activating command and the deactivating command.

In this case, two OTA messages may be sent by the distant machine DM. First an OTA message targeting SDA and containing the deactivating command is sent. SDA executes the deactivating command and sends a response to the distant machine DM. Then a second OTA message targeting SDB and containing the activating command is sent. SDB executes the activating command and sends a response to the distant machine DM.

The first SIM die may contain subscriber data corresponding to a first mobile network operator and second SIM die may contain subscriber data corresponding to a second mobile network operator. Thus an advantage of the invention is to allow changing the current mobile network operator of the device.

Another advantage of the invention is to allow changing the current mobile network operator after the device deployment on the field.

Another advantage of the invention is to allow mobile network operators to keep the ownership of their SIM chip. The invention does not require sharing a unique SIM chip between several mobile network operators. Moreover the invention does not require storing data belonging to several mobile network operators in a unique SIM chip.

Another advantage of the invention is to allow personalizing a SIM die of a device after the device deployment on the field.

Another advantage of the invention is to provide a solution allowing keeping the design of the existing device unchanged. Thanks to the invention, a packaging containing multi-layered dies is inserted in the device instead of a single traditional die.

Alternatively, the activating command and/or the deactivating command may be sent to the integrated circuit dies through a protocol different from the ISO-7816 standard. For example a single pad of the communication interface of the device may be used. Advantageously data may be multiplexed in time or in frequency on the single pad.

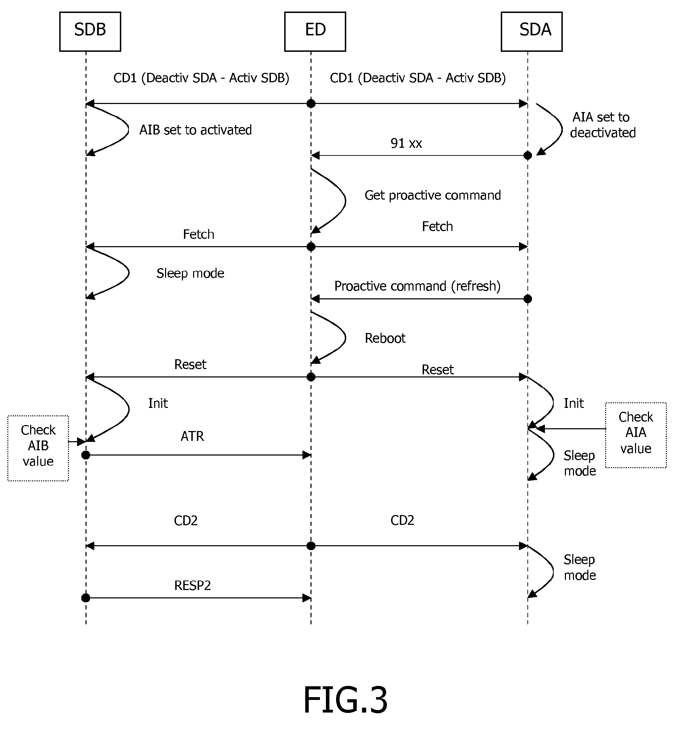

**Figure 3** shows an example of workflow for switching from an activated integrated circuit die to another one according to the invention. This example shows how the switch of the current integrated circuit die may be performed in a single message sent by a distant machine.

The device ED comprises two integrated circuit dies SDA and SDB which may comprise different IMSI/KI.

At the initial step, the integrated circuit die SDA is assumed to be active and the integrated circuit die SDB is assumed to be in deactivated state.

The distant machine DM sends a first message CD1 comprising two APDU commands: a deactivating command targeting SDA and an activating command targeting SDB. SDA comprises an activity indicator AIA which is set to a value corresponding to a deactivated state at receipt of the deactivating command. SDB comprises an activity indicator AIB which is set to a value corresponding to an activated state at receipt of the activating command. In response to the message CD1, SDA sends a status word "91 xx" where xx stand for the number of bytes to be retrieved by the module ED. SDB remains mute. The content of the activity indicators AIA and AIB is taken into account for switching the activity status during the initialization step triggered by a Reset. Then the device ED sends a "Fetch" to both SDA and SDB. SDB remains in sleep mode and does not send any response. SDA sends a proactive command Refresh. Then the device ED performs a reboot and sends a Reset to both SDA and SDB. Both SDA and SDB perform an initialization step. During the initialization step, SDA checks the value of its activity indicator AIA. Since the indicator AIA contains a value corresponding to a deactivated state, SDA switches in deactivated state and remains in sleep mode. During the initialization step, SDB checks the value of its activity indicator AIB. Since the indicator AIB contains a value corresponding to an activated state, SDB switches in the activated state and sends the Answer to Reset ATR. If a further command CD2 is received by SDA and SDB, SDA will stay mute and SDB will send a response RESP2 to CD2.

Alternatively, the activating command and the deactivating command may be merged in a unique specific command. Such a specific command may have two parameters, one for identifying the die to be deactivated and one for identifying the die to be activated.

In a preferred embodiment, an integrated circuit die remains mute when receiving an activating command or a deactivating command which target another integrated circuit die.

## Claims

1. An **integrated circuit die** (ICD) comprising:
- a microprocessor (MP),
- a communication interface (INT) intended to work according to ISO-7816 standard,
- a working memory (WM),
- a non volatile memory (MEM1),
- an operating system (OS),
**characterized in that** said integrated circuit die (ICD) comprises:
- a first means (M1) able to set said integrated circuit die (ICD) in an activated state when a first event occurs, and
- a second means (M2) able to set said integrated circuit die (ICD) in a deactivated state when a second event occurs, said deactivated state being a state
where the integrated circuit die (ICD) is able to sent data through the communication interface (INT) only in response to an activating command and/or to a deactivating command.

2. An integrated circuit die (ICD) according to claim 1, wherein said first event is the receipt of the activating command by the integrated circuit die (ICD), and wherein said second event is the receipt of the deactivating command by the integrated circuit die (ICD).

3. An integrated circuit die (ICD) according to claim 1, wherein said first event is the successive receipts of the activating command and a Reset by the integrated circuit die (ICD), and wherein said second event is the successive receipts of the deactivating command and a Reset by the integrated circuit die (ICD).

4. An integrated circuit die (ICD) according to one of claims 1 to 3, wherein said integrated circuit die (ICD) comprises identification data (ID) and wherein said activating command and deactivating command comprise a reference to said identification data (ID).

5. An integrated circuit die (ICD) according to claim 4, wherein said identification data (ID) comprises subscriber identity data.

6. An integrated circuit die (ICD) according to one of claims 1 to 5, wherein the activating command and/or the deactivating command are managed according to a protocol different from ISO-7816 standard.

7. An integrated circuit die (ICD) according to one of claims 1 to 6, wherein said integrated circuit die (ICD) is of SIM type.

8. An **electronic device** (ED), comprising a means (M3) able to establish a communication channel (WI) with a distant machine (DM),
**characterized in that** said electronic device (ED) comprises first and second integrated circuit dies (SDA, SDB) of claim 1 type.

9. An electronic device (ED) according to claim 8, wherein said first and second integrated circuit dies (SDA, SDB) are connected to the electronic device (ED) by means of a welding or in a removable way.

10. An electronic device (ED) according to one of claims 8 to 9, wherein said first integrated circuit die (SDA) comprises a first communication interface, said first communication interface comprising at least six pads (C1A, C2A, ..., C6A), wherein said second integrated circuit die (SDB) comprises a second communication interface, said second communication interface comprising at least six pads (C1B, C2B, ..., C6B), wherein said electronic device (ED) comprises a third communication interface, said third communication interface comprising at least six pads (C1, C2, ..., C6), and wherein pads (C1, C2, ..., C6) of the third communication interface are linked to the pads (C1A, C2A, ..., C6A) of the first communication interface respectively and linked to the pads (C1B, C2B, ..., C6B) of the second communication interface respectively.

11. An electronic device (ED) according to one of claims 8 to 10, wherein said first and second integrated circuit dies (SDA, SDB) come from a unique wafer or several wafers.

12. An electronic device (ED) according to one of claims 8 to 11, wherein said first integrated circuit die (SDA) comprises a subscriber identity data and wherein said second integrated circuit die (SDB) comprises the same subscriber identity data.
